# EUROPEAN PATENT APPLICATION

(11) **EP 4 750 081 A1**
(43) Date of publication of application: **27.05.2026**
(21) Application number: 25212114.0
(22) Date of filing: 29.10.2025
(51) Int. Cl.: H04R 1/10, H04R 5/033, G06F 3/16

(54) **CONTROL METHOD, HEADPHONE AND STORAGE MEDIUM**

(30) Priority: 01.11.2024 CN 202411567571
(71) Applicant: Shenzhen Dancing Future Technology Ltd., Shenzhen, Guangdong 518000 (CN)
(72) Inventor: CAI, Wei, Beijing, 100028 (CN); LI, Xinyu, Beijing, 100028 (CN); XIA, Qing, Beijing, 100028 (CN); XU, Meng, Beijing, 100028 (CN); LI, Haoqian, Beijing, 100028 (CN); YANG, Ju, Beijing, 100028 (CN)
(74) Representative: Isarpatent

(57) **Abstract**

Embodiments of the present disclosure provide a control method, a headphone and a storage medium. The method, applied to a headphone, includes: monitoring a wearing state of the headphone; acquiring an operation instruction of a user for the headphone, where the operation instruction includes at least one of a wake-up instruction, a photographing instruction, an inquiry instruction or an audio playing instruction; and according to the wearing state and the operation instruction, controlling the headphone to perform a corresponding target operation. The flexibility of using the headphone is improved.

## Description

### TECHNICAL FIELD

Embodiments of the present disclosure relate to a control method, a headphone and a storage medium.

### BACKGROUND

The headphone may interact with a user through a voice assistant, thereby improving the experience of using the headphone.

At present, the headphone may collect an operation instruction of the user, and process the operation instruction of the user through the voice assistant to obtain a corresponding reply voice. In the above process, the headphone may perform a corresponding operation according to the operation instruction of the user. However, in the daily use process of the headphone, the headphone may be in an un-worn state, such as the user takes the headphone out of the headphone box but does not wear it, the user temporarily takes the headphone off the ear, or the headphone falls off the ear during use. In these cases, if the voice assistant still interacts with the user as if the headphone were in the worn state, it will not conform to the user's usage habits, making the headphone less flexible to use and poor in experience.

### SUMMARY

Embodiments of the present disclosure provide a control method a headphone, and a storage medium, which makes the usage of the headphone to conform to the user's usage habits, and makes the headphone more flexible to use.

In a first aspect, an embodiment of the present disclosure provides a control method, which is applied to a headphone, and the method includes:
monitoring a wearing state of the headphone;
acquiring an operation instruction of a user for the headphone, wherein the operation instruction includes at least one of a wake-up instruction, a photographing instruction, an inquiry instruction or an audio playing instruction; and
according to the wearing state and the operation instruction, controlling the headphone to perform a corresponding target operation.

In a second aspect, an embodiment of the present disclosure provides a control device, including:
a monitoring module, configured to monitor a wearing state of a headphone;
an acquiring module, configured to acquire an operation instruction of a user for the headphone, wherein the operation instruction includes at least one of a wake-up instruction, a photographing instruction, an inquiry instruction or an audio playing instruction; and
a controlling module, configured to control the headphone to perform a corresponding target operation according to the wearing state and the operation instruction.

In a third aspect, an embodiment of the present disclosure provides a headphone, including: a processor and a memory;
wherein the memory stores a computer-executable instruction; and
the processor executes the computer-executable instruction stored in the memory, to cause the at least one processor to execute the control method according to the first aspect and various possible designs of the first aspect.

In a fourth aspect, an embodiment of the present disclosure provides a computer-readable storage medium, wherein a computer-executable instruction is stored in the computer-readable storage medium, and when the computer-executable instruction is executed by a processor, the control method according to the first aspect and various possible designs of the first aspect is implemented.

In a fifth aspect, an embodiment of the present disclosure provides a computer program product, including a computer program, wherein when the computer program is executed by a processor, the control method according to the first aspect and various possible designs of the first aspect is implemented.

According to the control method and device, and the headphone provided by the embodiments, the wearing state of the headphone is monitored, the operation instruction of the user for the headphone is acquired, and the headphone is controlled to perform the corresponding target operation according to the wearing state and the operation instruction. In the above process, when acquiring the operation instruction, the headphone simultaneously monitors and determines the wearing state of the headphone, and controls the headphone to perform the corresponding target operation according to the wearing state and the operation instruction, so as to avoid a situation that the headphone which is used by is in the un-worn state, the headphone may continue to perform the corresponding operation, but the user may not acquire information corresponding to the operation of the headphone, thereby improving the flexibility of using the headphone.

### BRIEF DESCRIPTION OF DRAWINGS

In order to more clearly explain the technical solutions in the embodiments of the present disclosure or in the prior art, the following will briefly introduce the drawings that need to be used in the description of the embodiments or the prior art. Obviously, the drawings in the following description are some embodiments of the present disclosure. For those of ordinary skill in the art, other drawings may be obtained based on these drawings without creative efforts.
Fig. 1 is a schematic diagram of an application scenario provided by an embodiment of the present disclosure;
Fig. 2 is a schematic flowchart of a control method provided by an embodiment of the present disclosure;
Fig. 3 is a schematic diagram of a process of acquiring an operation instruction of a user for a headphone provided by an embodiment of the present disclosure;
Fig. 4 is a schematic flowchart of another control method provided by an embodiment of the present disclosure;
Fig. 5 is a schematic diagram of a process of setting a wearing detection switch provided by an embodiment of the present disclosure;
Fig. 6 is a schematic diagram of a process of setting photographing configuration information provided by an embodiment of the present disclosure;
Fig. 7 is a schematic diagram of a controlling process provided by an embodiment of the present disclosure;
Fig. 8 is a structural block diagram of a control device provided by an embodiment of the present disclosure;
Fig. 9 is a structural block diagram of another control device provided by an embodiment of the present disclosure; and
Fig. 10 is a schematic structural diagram of a headphone provided by an embodiment of the present disclosure.

### DETAILED DESCRIPTION

In order to make the purposes, technical solutions and advantages of the embodiments of the present disclosure clearer, the technical solutions in the embodiments of the present disclosure will be clearly and completely described below in conjunction with the drawings in the embodiments of the present disclosure. Obviously, the described embodiments are part of the embodiments of the present disclosure, but not all of the embodiments. Based on the embodiments in the present disclosure, all other embodiments obtained by persons of ordinary skill in the art without creative efforts fall within the protection scope of the present disclosure.

It should be noted that the user information (including but not limited to user device information, user personal information, etc.) and data (including but not limited to data for analysis, stored data, displayed data, etc.) involved in one or more embodiments of this specification are all information and data authorized by the user or fully authorized by all parties, and the collection, use and processing of the relevant data needs to comply with relevant laws, regulations and standards, and provide corresponding operation entrances for the user to choose to authorize or reject.

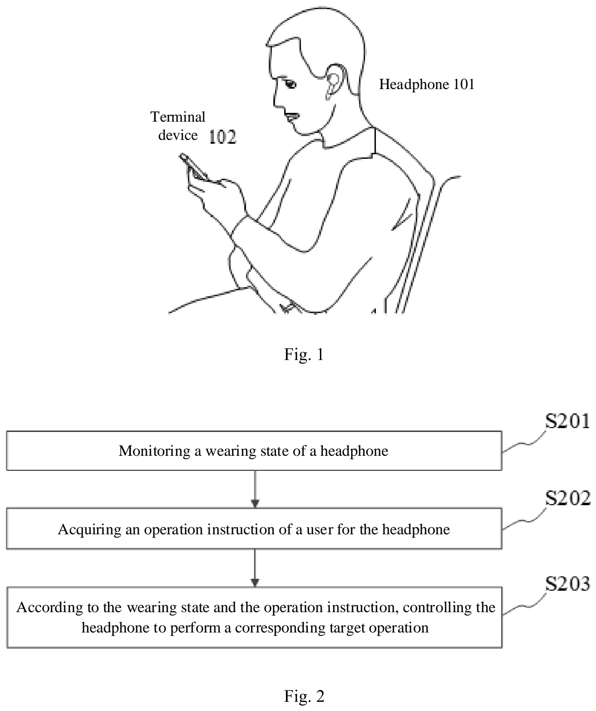

For ease of understanding, an application scenario to which the embodiments of the present disclosure are applicable will be described below with reference to Fig. 1.

Fig. 1 is a schematic diagram of an application scenario provided by an embodiment of the present disclosure. Please refer to Fig. 1, it includes a headphone 101 and a terminal apparatus 102. The terminal apparatus 102 may be a mobile phone, a tablet computer, etc. The headphone 101 is connected to the terminal apparatus 102, and a user may control the headphone 101 to perform a corresponding operation through the terminal apparatus 102. Alternatively, the headphone 101 may directly collect an operation instruction of the user, and perform a corresponding operation according to the operation instruction of the user.

In the above process, the headphone may perform the corresponding operation according to the operation instruction of the user. However, in the daily use process of the headphone, the headphone may be in an un-worn state, such as the user takes the headphone out of the headphone box but does not wear it, the user temporarily takes the headphone off the ear, or the headphone falls off the ear during use. In these cases, if the voice assistant still interacts with the user as if the headphone were in the worn state, it will not conform to the user's usage habits, making the headphone less flexible to use and poor in experience.

In the embodiments of the present disclosure, the wearing state of the headphone is monitored, the operation instruction of the user for the headphone is acquired, and the headphone is controlled to perform the corresponding target operation according to the wearing state and the operation instruction. In the above process, when the headphone acquires the operation instruction, the wearing state of the headphone is simultaneously monitored and determined, and the headphone is controlled to perform the corresponding target operation according to the wearing state and the operation instruction, so as to avoid that when the headphone is in the un-worn state, the voice assistant still interacts with the user as if the headphone were in the worn state, making the headphone less flexible to use and poor in experience, thereby improving the flexibility of using the headphone.

Next, the method shown in the present disclosure will be described through specific embodiments. It should be noted that the following embodiments may exist alone or in combination with each other, and the same or similar content will not be repeated in different embodiments.

Fig. 2 is a schematic flowchart of a control method provided by an embodiment of the present disclosure. Referring to Fig. 2, the method may include:
S201, monitoring a wearing state of a headphone.

An execution body of the embodiments of the present disclosure may be a headphone, or a chip, a chip module or a control device, etc. which is arranged in a terminal apparatus. The control device may be implemented by software, or by a combination of software and hardware. A camera is arranged in the headphone.

A sensor may be arranged in the headphone, and the wearing state of the headphone is determined by the sensor. The wearing state of the headphone may be a worn state or an un-worn state.

The sensor may be an infrared sensor, a capacitive sensor, an optical sensor, an inertial sensor, etc., and the inertial sensor includes a gyroscope.

S202, acquiring an operation instruction of a user for the headphone.

The operation instruction includes at least one of a wake-up instruction, a photographing instruction, an inquiry instruction or an audio playing instruction. The wake-up instruction is used for waking up a voice assistant connected to the headphone, the photographing instruction is used for instructing a camera on the headphone to capture an image, the inquiry instruction is used for having a conversation with the voice assistant connected to the headphone, and the audio playing instruction is used for instructing the headphone to play media audio.

The operation instruction may be in a form of voice, gesture, touch, etc.

For example, after the user wears the headphone, the headphone may collect a first voice of the user, and generate the wake-up instruction according to the first voice.

Optionally, the headphone may also establish a wireless connection with a terminal apparatus. The terminal apparatus may generate an operation instruction according to a user operation, and send the operation instruction to the headphone.

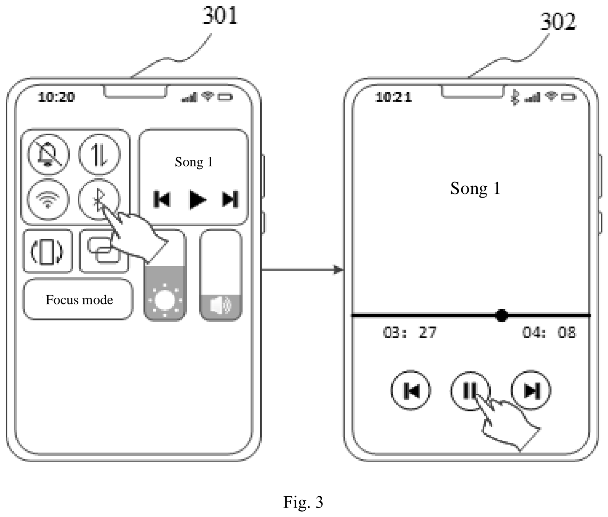

Next, a process of acquiring the operation instruction of the user for the headphone will be described with reference to Fig. 3. Fig. 3 is a schematic diagram of a process of acquiring an operation instruction of a user for a headphone provided by an embodiment of the present disclosure. Referring to Fig. 3, it includes an interface 301 to an interface 302. The interface 301 to the interface 302 may be pages provided by the terminal apparatus. Referring to the interface 301, it includes a control page of the terminal apparatus. The user may click a Bluetooth icon on the control page of the terminal apparatus. The terminal apparatus turns on the Bluetooth function in response to the click operation of the user, and establishes a Bluetooth connection with the headphone. Referring to the interface 302, the user clicks an icon corresponding to playing audio in an audio application. The terminal apparatus generates an audio playing instruction in response to the click operation of the user, and sends the audio playing instruction to the headphone.

S203, according to the wearing state and the operation instruction, controlling the headphone to perform a corresponding target operation.

The operation instruction is a wake-up instruction, and the headphone may be controlled to perform the corresponding target operation according to the wearing state and the operation instruction in a following manner: if the wearing state is a worn state, controlling the headphone to wake up a voice assistant connected to the headphone.

The voice assistant may be an artificial intelligence model. The voice assistant may be arranged in the headphone, or may be arranged in a server or the terminal apparatus. The headphone establishes a connection with the server or the terminal apparatus, thereby establishing a connection with the voice assistant.

The operation instruction is a photographing instruction, and the headphone may be controlled to perform the corresponding target operation according to the wearing state and the operation instruction in the following manner: acquiring photographing configuration information in response to the photographing instruction; and controlling, according to the photographing configuration information and the wearing state, the headphone to perform the corresponding target operation.

A camera is arranged in the headphone. The photographing configuration information may be photographing configuration information set by a user or default photographing configuration information of the headphone, for example, the user sets the photographing configuration information in an application for controlling the headphone, or the headphone is already configured with the photographing configuration information when leaving the factory. The present disclosure does not limit this.

When it is determined that the operation instruction is the photographing instruction, the headphone is controlled to perform the corresponding target operation according to the photographing configuration information and the wearing state, which is favorable for the headphone to flexibly respond to the photographing instruction when the headphone is in the un-worn state or the wearing state does not match the photographing configuration information, thereby improving the user experience.

The operation instruction is an inquiry instruction, and the headphone may be controlled to perform the corresponding target operation according to the wearing state and the operation instruction in a following manner: if the wearing state is a worn state, controlling the headphone to play a reply voice for the inquiry instruction provided by a voice assistant connected to the headphone; and if the wearing state is an un-worn state, controlling the headphone not to play the reply voice.

The voice assistant may process the inquiry instruction of the user to obtain the reply voice corresponding to the inquiry instruction.

When the headphone acquires the inquiry instruction, determining whether to play the reply voice according to the wearing state may avoid a situation that the headphone still plays the reply voice when the headphone is not worn, which may cause the user unable to obtain reply information, thereby improving the experience of the user using the headphone.

The operation instruction is the audio playing instruction, and the headphone may be controlled to perform the corresponding target operation according to the wearing state and the operation instruction in the following manner: if the wearing state is the worn state, controlling the headphone to play audio; and if the wearing state is the un-worn state, controlling the headphone not to play the audio.

When the headphone acquires the audio playing instruction, determining whether to play the audio according to the wearing state may avoid a situation that the headphone still plays audio when the headphone is not worn, resulting in low flexibility in using the headphone. The experience of the user using the headphone is improved.

According to the control method provided by the embodiments of the present disclosure, the wearing state of the headphone is monitored, the operation instruction of the user for the headphone is acquired, and the headphone is controlled to perform the corresponding target operation according to the wearing state and the operation instruction. In the above process, when the headphone acquires the operation instruction, the wearing state of the headphone is simultaneously monitored and determined, and the headphone is controlled to perform the corresponding target operation according to the wearing state and the operation instruction, so as to avoid that when the user takes the headphone out of the headphone box but does not wear it, or the user temporarily takes the headphone off the ear, or the headphone falls off the ear during use, the voice assistant still interacts with the user as if the headphone were in the worn state, making the headphone less flexible to use and poor in experience, thereby improving the flexibility of using the headphone.

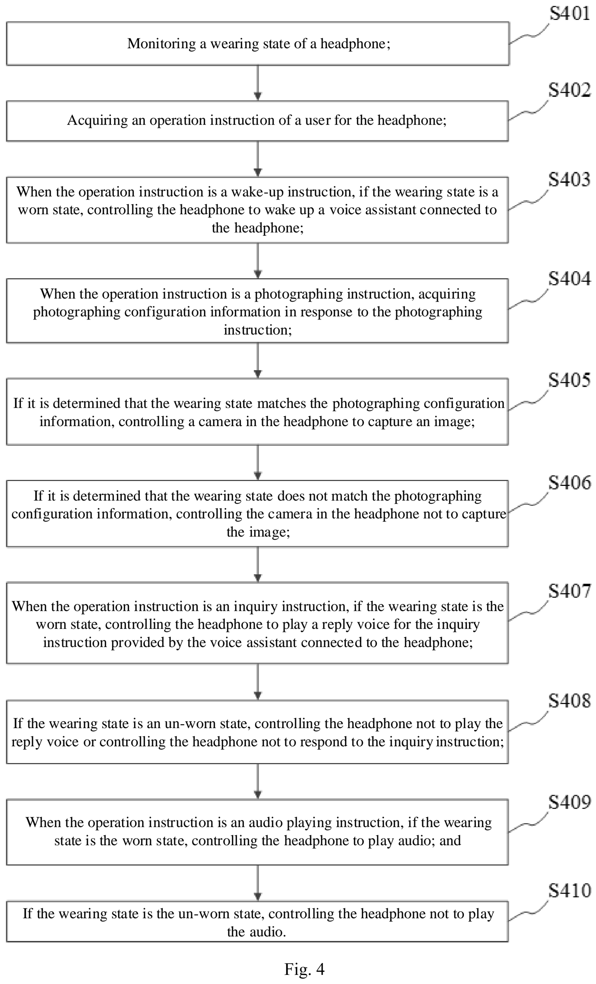

On the basis of any of the above embodiments, a detailed controlling process will be described below with reference to Fig. 4.

Fig. 4 is a schematic flowchart of another control method provided by an embodiment of the present disclosure. Referring to Fig. 4, the method includes:
S401, monitoring a wearing state of a headphone.

The user may determine whether to enable wearing detection on the configuration page. After it is determined that the wearing detection is enabled, the wearing state of the headphone may be monitored in real time. Under normal circumstances, the wearing detection is enabled.

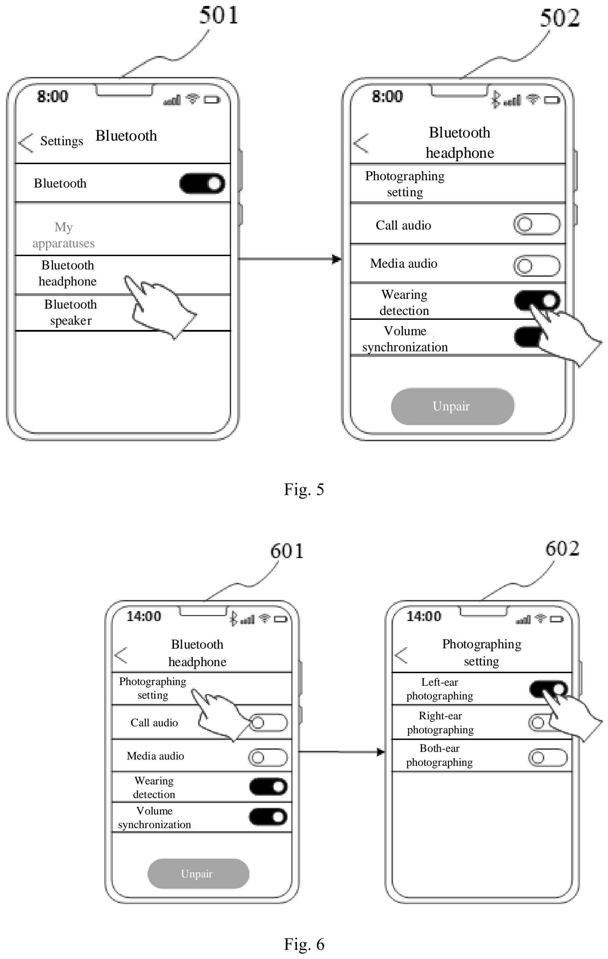

Next, a process of setting a wearing detection switch will be described with reference to Fig. 5. Fig. 5 is a schematic diagram of a process of setting a wearing detection switch provided by an embodiment of the present disclosure. Referring to Fig. 5, it includes an interface 501 to an interface 502. The interface 501 to the interface 502 may be pages provided by the terminal apparatus. The terminal apparatus establishes a connection with a Bluetooth headphone. Referring to the interface 501, it includes a Bluetooth setting page. The Bluetooth setting page includes a plurality of Bluetooth apparatuses that establish a Bluetooth connection with the terminal apparatus. For example, the Bluetooth apparatuses may be a Bluetooth headphone and a Bluetooth speaker. The user may click an icon corresponding to the Bluetooth headphone on the Bluetooth setting page of the terminal apparatus. Referring to the interface 502, the terminal apparatus displays a configuration page of the Bluetooth headphone in response to the click operation of the user. The user may click a switch icon corresponding to wearing detection on the configuration page of the Bluetooth headphone. The terminal apparatus controls the headphone to enable or disable the wearing detection in response to the click operation of the user.

S402, acquiring an operation instruction of a user for the headphone.

It should be noted that for an executing process of S402, reference may be made to S202, which will not be repeated here.

S403, when the operation instruction is a wake-up instruction, if the wearing state is a worn state, controlling the headphone to wake up a voice assistant connected to the headphone.

The voice assistant connected to the headphone is controlled to play a preset voice, where the preset voice is used for indicating that the voice assistant is in a wake-up state.

The preset voice may be set in advance, and the preset voice is stored in a preset storage space of the headphone. For example, the preset voice may be "I am here".

For example, after wearing the headphone, the user says "Doubao, Doubao". The headphone collects the voice of the user, and generates a wake-up instruction. At this time, the headphone determines that the wearing state is the worn state. Therefore, the headphone wakes up the voice assistant connected to the headphone, and plays the preset voice "I am here" to prompt the user that the voice assistant is in the wake-up state.

If the wearing state is an un-worn state, the headphone is controlled not to perform any operation.

S404, when the operation instruction is a photographing instruction, acquiring photographing configuration information in response to the photographing instruction.

The user may set the photographing configuration information on a headphone configuration page in the terminal apparatus. The terminal apparatus controls the headphone to store the photographing configuration information in a preset storage space in response to an operation of the user. In this way, when the headphone acquires the photographing instruction, the photographing configuration information may be acquired from the preset storage space.

Next, a process of setting the photographing configuration information will be described with reference to Fig. 6. Fig. 6 is a schematic diagram of a process of setting photographing configuration information provided by an embodiment of the present disclosure. Referring to Fig. 6, it includes an interface 601 to an interface 602. The interface 601 to the interface 602 may be pages provided by the terminal apparatus. The terminal apparatus establishes a connection with a Bluetooth headphone. Referring to the interface 601, the interface 601 may be the configuration page of the Bluetooth headphone as shown in Fig. 5 above. The user clicks an icon corresponding to photographing setting on the configuration page of the Bluetooth headphone. Referring to the interface 602, the terminal apparatus displays a photographing setting page in response to the click operation of the user. The photographing setting page includes a switch icon corresponding to left-ear photographing, a switch icon corresponding to right-ear photographing and a switch icon corresponding to both-ear photographing. The user may click the switch icon corresponding to left-ear photographing on the photographing setting page. The terminal apparatus generates the photographing configuration information in response to the click operation of the user. The photographing configuration information indicates that the left headphone captures an image. The terminal apparatus controls the headphone to store the photographing configuration information in a preset storage space.

S405, if it is determined that the wearing state matches the photographing configuration information, controlling a camera in the headphone to capture an image.

The wearing state matching the photographing configuration information may be determined in at least one of the following manners: the photographing configuration information indicates that both ears capture images, and the wearing state indicates that both headphones are in the worn state; the photographing configuration information indicates that both ears capture images, and the wearing state indicates that only one headphone is in the worn state; or the photographing configuration information indicates that a single ear captures an image, and the wearing state indicates that both headphones are in the worn state; or the photographing configuration information indicates that a single headphone, for example, a left headphone, captures an image, and the wearing state indicates that the headphone, for example, a left headphone, is in the worn state.

For example, it is assumed that after the user wears the headphone and wakes up the voice assistant of the headphone, the user says "please capture an image of the bottle of water in front of me". The headphone collects the voice input by the user, and generates a photographing instruction according to the voice. The headphone acquires the photographing configuration information from the preset storage space, which indicates that both headphones capture images. At this time, the headphone determines that the wearing state indicates that both headphones are in the worn state. Therefore, the headphone determines that the wearing state matches the photographing configuration information, and controls the camera in the headphone to capture the image.

S406, if it is determined that the wearing state does not match the photographing configuration information, controlling the camera in the headphone not to capture the image.

The wearing state not matching the photographing configuration information may be determined in the following manner: the photographing configuration information indicates that one of the headphones captures an image, and the wearing state indicates that only another of the headphones is in the worn state.

If it is determined that the wearing state does not match the photographing configuration information, the headphone is controlled to play a prompt voice, where the prompt voice is used for prompting the photographing configuration information.

For example, it is assumed that after the user wears the headphone and wakes up the voice assistant of the headphone, the user says "please capture an image of the bottle of water in front of me". The headphone collects the voice input by the user, and generates a photographing instruction according to the voice. The headphone acquires the photographing configuration information from the preset storage space, which indicates that the left headphone captures an image. At this time, the headphone determines that the wearing state indicates that only the right ear is in the worn state. At this time, the headphone determines that the wearing state does not match the photographing configuration information, and controls the camera in the headphone not to capture the image. At the same time, a prompt voice is generated, and the prompt voice is played. The prompt voice is used for prompting that the photographing configuration information indicates that the left headphone captures an image.

When the headphone acquires the photographing instruction, determining whether to capture the image according to the photographing configuration information and the wearing state may avoid misoperation when the headphone is not worn and misoperation when the wearing state does not match the photographing configuration information when the headphone is worn. In this way, the headphone may be prevented from collecting unnecessary images, the power consumption of the headphone may be reduced, and the data information leakage of the user may be avoided, thereby improving the security and reliability of the user using the headphone.

S407, when the operation instruction is an inquiry instruction, if the wearing state is a worn state, controlling the headphone to play a reply voice for the inquiry instruction provided by a voice assistant connected to the headphone.

For example, it is assumed that after the user wears the headphone and wakes up the voice assistant of the headphone, the user says "what's the weather today". The headphone collects the voice input by the user, and generates an inquiry instruction according to the voice. If the voice assistant is arranged in the terminal apparatus, the headphone sends the inquiry instruction to the terminal apparatus. After receiving the inquiry instruction, the terminal apparatus processes the inquiry instruction through the voice assistant to obtain a reply voice "today's weather is cloudy to light rain, and it will start to rain at about 4:00 pm" corresponding to the inquiry instruction. The terminal apparatus sends the reply voice to the headphone, and after receiving the reply voice, the headphone determines that the wearing state is the worn state. At this time, the headphone plays the reply voice through the speaker.

When the reply voice is being played, if it is determined that the wearing state changes from the worn state to the un-worn state, the headphone is controlled to pause playing the reply voice.

If it is determined that the wearing state changes from the un-worn state to the worn state, a first duration corresponding to the un-worn state is determined, and the headphone is controlled to perform a corresponding target operation according to the first duration.

The headphone may be controlled to perform the corresponding target operation according to the first duration in the following manner: if the first duration is less than or equal to a first preset duration, when it is determined that the wearing state changes from the un-worn state to the worn state, the headphone is controlled to continue playing an unplayed reply voice; and if the first duration is greater than the first preset duration, a text corresponding to the reply voice is displayed through a terminal apparatus connected to the headphone.

The first preset duration may be set in advance, and the first preset duration is stored in the preset storage space of the headphone. The first preset duration may be 60s.

For example, according to the above example, the reply voice is determined to be "Today's weather is cloudy to light rain, and it will start to rain at about 4:00 pm". When the headphone is playing the reply voice through the speaker, the user takes the headphone off or the headphone accidentally falls off. At this time, the headphone determines that the wearing state changes from the worn state to the un-worn state, the headphone pauses playing the reply voice. When the headphone determines that the wearing state changes from the un-worn state to the worn state, the first duration corresponding to the un-worn state is determined to be 10s. The headphone acquires the first preset duration of 60s from the preset storage space, and then it may be determined that the first duration is less than the first preset duration. Therefore, the headphone determines that the unplayed voice is "it will start to rain at about 4:00 pm". The headphone continues to play the unplayed reply voice "it will start to rain at about 4:00 pm".

If the first duration is greater than the first preset duration, it is determined whether the terminal apparatus connected to the headphone is in a connection state. If yes, the text corresponding to the reply voice is displayed through the terminal apparatus connected to the headphone.

For example, according to the above example, the reply voice is determined to be "Today's weather is cloudy to light rain, and it will start to rain at about 4:00 pm". When the headphone is playing the reply voice through the speaker, the user takes the headphone off or the headphone accidentally falls off. At this time, the headphone determines that the wearing state changes from the worn state to the un-worn state, the headphone pauses playing the reply voice. When the headphone determines that the wearing state changes from the un-worn state to the worn state, the first duration corresponding to the un-worn state is determined to be 90s. The headphone acquires the first preset duration of 60s from the preset storage space, and then it may be determined that the first duration is greater than the first preset duration. At this time, the headphone determines that the terminal apparatus connected to the headphone is in the connection state. Therefore, the text "Today's weather is cloudy to light rain, and it will start to rain at about 4:00 pm" corresponding to the reply voice is displayed through the terminal apparatus connected to the headphone.

When the reply voice is being played, if it is determined that the wearing state changes from the worn state to the un-worn state, the headphone is controlled not to respond to a new inquiry instruction.

The headphone may be controlled not to respond to the new inquiry instruction in the following manner: controlling the headphone not to receive voice information of the new inquiry instruction.

For example, according to the above example, the reply voice is determined to be "Today's weather is cloudy to light rain, and it will start to rain at about 4:00 pm". **In** the process of the headphone playing the reply voice through the speaker, the user takes the headphone off or the headphone accidentally falls off. At this time, the headphone determines that the wearing state changes from the worn state to the un-worn state. If the headphone still collects the voice of the user, the headphone does not receive the voice information of the new inquiry instruction, so as to avoid that the headphone still collects the voice of the user in the un-worn state without the user's awareness.

S408, if the wearing state is an un-worn state, controlling the headphone not to play the reply voice or controlling the headphone not to respond to the inquiry instruction.

For example, according to the above example, the reply voice is determined to be "Today's weather is cloudy to light rain, and it will start to rain at about 4:00 pm". After the reply voice is determined, the headphone determines that the wearing state is the un-worn state, and the headphone does not play the reply voice.

When the headphone acquires the inquiry instruction, determining whether to play the reply voice according to the wearing state may avoid a situation that the headphone still plays voice when the headphone is not worn but the user cannot obtain corresponding information. Moreover, a corresponding information acquisition strategy may be provided when the headphone is in the un-worn state, thereby improving the experience of the user using the headphone.

S409, when the operation instruction is an audio playing instruction, if the wearing state is a worn state, controlling the headphone to play audio.

The audio played by the headphone is audio in a terminal apparatus establishing a connection with the headphone.

For example, it is assumed that after the user wears the headphone and clicks the headphone, the headphone generates an audio playing instruction according to a click operation of the user. At this time, the headphone determines that the wearing state is the worn state, and the headphone determines a terminal apparatus establishing a connection with the headphone, and plays song A in the terminal apparatus.

In an audio playing process, if it is determined that the wearing state changes from the worn state to the un-worn state, the headphone is controlled to pause playing the audio, and in response to determining that the wearing state is the worn state, a connection state of the headphone during an un-worn period is determined, and the headphone is controlled to perform a corresponding target operation according to the connection state.

A start moment of the un-worn period is a moment corresponding to a moment when it is determined that the wearing state changes from the worn state to the un-worn state, and an end moment of the un-worn period is a moment corresponding to a moment when it is determined that the wearing state is the worn state.

The headphone may be controlled to perform the corresponding target operation according to the connection state in the following manner: if the connection state of the headphone during the un-worn period is used for indicating that the headphone is not disconnected, acquiring audio to be played corresponding to the un-worn period, and controlling the headphone to play the audio to be played; and if the connection state of the headphone during the un-worn period is used for indicating that the headphone is disconnected, controlling the headphone not to play the audio.

For example, according to the above example, it is determined to play song A in the terminal apparatus. At 91s of song A, the headphone determines that the wearing state changes from the worn state to the un-worn state, and the headphone is controlled to pause playing song A, and the current moment is determined to be moment B1. When the headphone determines that the wearing state changes from the un-worn state to the worn state, the moment corresponding to the change to the worn state is determined to be moment B2, and the un-worn period may be determined to be from moment B1 to moment B2. The headphone determines that the connection state of the headphone during the period from moment B1 to moment B2 is used for indicating that the headphone is not disconnected, and acquires that the audio to be played corresponding to the un-worn period is audio after 91s of song A. Therefore, the headphone continues to play the audio after 91s of song A at moment B2.

In the audio playing process, if it is determined that the first voice corresponding to the inquiry instruction is acquired and the duration of the first voice is greater than or equal to a second preset duration, the headphone is controlled to adjust the volume of the playing audio from a first volume to a preset volume until it is determined that the first voice ends, and the headphone is controlled to adjust the volume of the playing audio to the first volume.

The end of the first voice may be determined in the following manner: if the headphone does not detect human voice and the duration corresponding to the situation that no human voice is detected is greater than or equal to a third preset duration, it is determined that the first voice ends.

The second preset duration, the third preset duration and the preset volume may be set in advance, and the second preset duration, the third preset duration and the preset volume are stored in the preset storage space of the headphone. The second preset duration may be 3s. The third preset duration may be 5s.

For example, according to the above example, it is determined to play song A in the terminal apparatus. The first volume for playing song A is determined to be 30. At 91s of song A, the first voice is collected by the headphone, and when it is determined that the duration corresponding to the first voice is greater than 3s, the headphone is controlled to adjust the volume of playing song A from the first volume of 30 to the preset volume of 10. That is, at 94s of song A, the volume of song A is adjusted to 10. At 100s of song A, it is determined that the headphone does not detect human voice. In the period of 100s to 105s of song A, the headphone determines that no human voice is detected, and it may be determined that the headphone does not detect human voice and the duration corresponding to the situation that no human voice is detected is equal to the third preset duration of 5s. Therefore, the headphone determines that the first voice ends. At this time, the headphone adjusts the volume of song A from the preset volume of 10 to the first volume of 30. That is, at 101s of song A, the volume of song A is adjusted to 30.

S410, if the wearing state is an un-worn state, controlling the headphone not to play the audio.

For example, it is assumed that the headphone generates an audio playing instruction according to a click operation of the user. At this time, the headphone determines that the wearing state is the un-worn state, and the headphone does not play audio.

When the headphone acquires the audio playing instruction, determining whether to play the audio according to the wearing state may avoid that the headphone still plays audio when the headphone is not worn, thereby reducing the power consumption of the headphone. Moreover, a corresponding headphone usage strategy may be provided when the user has other operations in the audio playing process, thereby improving the experience of the user using the headphone.

According to the control method provided by the embodiments of the present disclosure, the wearing state of the headphone is monitored, the operation instruction of the user for the headphone is acquired, and when the operation instruction is a wake-up instruction, if the wearing state is a worn state, the headphone is controlled to wake up a voice assistant connected to the headphone; when the operation instruction is a photographing instruction, photographing configuration information is acquired in response to the photographing instruction, and if it is determined that the wearing state matches the photographing configuration information, a camera in the headphone is controlled to capture an image, and if it is determined that the wearing state does not match the photographing configuration information, the camera in the headphone is controlled not to capture the image; when the operation instruction is an inquiry instruction, if the wearing state is the worn state, the headphone is controlled to play a reply voice for the inquiry instruction provided by the voice assistant connected to the headphone, and if the wearing state is an un-worn state, the headphone is controlled not to play the reply voice; and when the operation instruction is an audio playing instruction, if the wearing state is the worn state, the headphone is controlled to play audio, and if the wearing state is the un-worn state, the headphone is controlled not to play the audio. In the above process, when acquiring the operation instruction, the headphone simultaneously monitors and determines the wearing state of the headphone, and controls the headphone to perform a corresponding target operation according to the wearing state and the operation instruction, so as to avoid that the headphone may continue to perform the corresponding operation when the headphone is in the un-worn state, and the user may not be able to obtain information corresponding to a headphone operation when the headphone is in the un-worn state, thereby improving the flexibility of using the headphone.

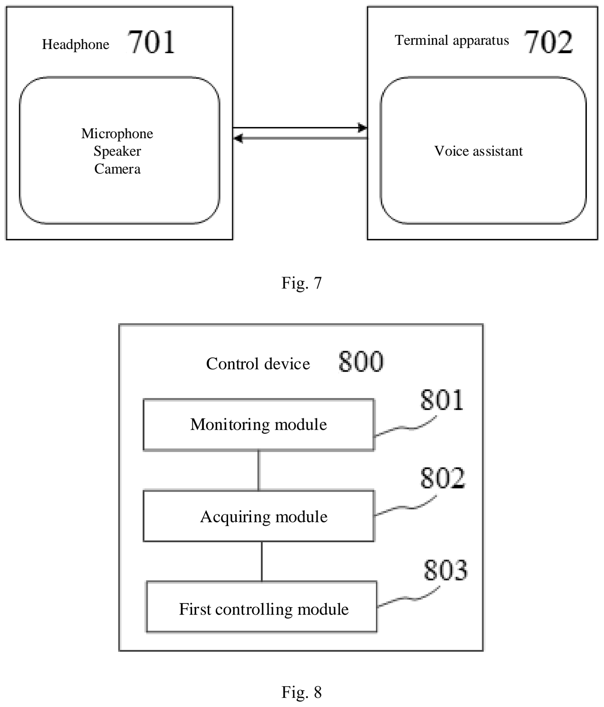

On the basis of any of the above embodiments, a controlling process will be described below as an example with reference to Fig. 7.

Fig. 7 is a schematic diagram of a controlling process provided by an embodiment of the present disclosure. Referring to Fig. 7, it includes a headphone 701 and a terminal apparatus 702. A microphone, a speaker and a camera are arranged in the headphone 701. The terminal apparatus 702 may be a mobile phone, a tablet computer, a computer, etc. A voice assistant is arranged in the terminal apparatus 702, and the voice assistant may be an artificial intelligence model. The headphone 701 establishes a connection with the terminal apparatus 702 through Bluetooth. After wearing the headphone 701, the user says "Doubao, Doubao". The microphone of the headphone 701 collects the voice of the user, and generates a wake-up instruction according to the voice of the user. At this time, the headphone 701 determines that the wearing state is the worn state. Therefore, the headphone 701 wakes up the voice assistant in the terminal apparatus 702 connected to the headphone, and plays a preset voice "I am here" through the speaker to prompt the user that the voice assistant is in the wake-up state.

The microphone of the headphone 701 collects the voice "play song C" of the user, and the headphone 701 generates an audio playing instruction according to the voice "play song C". The headphone 701 determines that the wearing state is the worn state, and controls the speaker of the headphone 701 to play song C in the terminal apparatus 701. At 10s of song C, the headphone 701 determines that the wearing state changes from the worn state to the un-worn state, and controls the speaker of the headphone 701 to pause playing song C, and determines the current moment to be moment C1. When the headphone determines that the wearing state changes from the un-worn state to the worn state, the moment corresponding to the change to the worn state is determined to be moment C2, and the un-worn period may be determined to be from moment C1 to moment C2. The headphone 701 determines that the connection state of the headphone 701 during the period from moment C1 to moment C2 is used for indicating that the headphone 701 is not disconnected, and acquires that the audio to be played corresponding to the un-worn period is audio after 10s of song C. Therefore, the headphone 701 continues to play the audio after 10s of song C at moment C2 through the speaker.

At 30s of song C, the microphone of the headphone 701 collects the voice of the user "what's the temperature today? how to dress?". The headphone 701 generates an inquiry instruction according to the voice of the user, determines the first voice corresponding to the inquiry instruction, and the duration of the first voice is greater than the second preset duration of 3s. At 33s of song C, the headphone 701 controls the speaker to adjust the volume of playing song C from the first volume of 35 to the preset volume of 10. In the period of 40s to 45s of song C, the headphone 701 determines that no human voice is detected, and it may be determined that the headphone does not detect human voice and the duration corresponding to the situation that no human voice is detected is equal to the third preset duration of 5s. Therefore, the headphone 701 determines that the first voice ends. At this time, the headphone 701 adjusts the volume of song C from the preset volume of 10 to the first volume of 35. That is, at 46s of song C, the volume of song C is adjusted to 35.

After acquiring the first voice, the headphone 701 sends the first voice to the terminal apparatus 702. The voice assistant of the terminal apparatus 701 processes the first voice to obtain a reply voice "today's temperature ranges from 25°C to 36°C, and it is recommended to wear short sleeves" corresponding to the inquiry instruction. The terminal apparatus 702 sends the reply voice to the headphone 701. After receiving the reply voice, the headphone 701 determines that the wearing state of the headphone 701 is the un-worn state. At this time, the headphone 701 displays, through the terminal apparatus 702, the text "today's temperature ranges from 25°C to 36°C, and it is recommended to wear short sleeves" corresponding to the reply voice.

According to the controlling process provided by the embodiments of the present disclosure, the wearing state of the headphone is monitored, the operation instruction of the user for the headphone is acquired, and when the operation instruction is a wake-up instruction, if the wearing state is a worn state, the headphone is controlled to wake up a voice assistant connected to the headphone; when the operation instruction is a photographing instruction, photographing configuration information is acquired in response to the photographing instruction, and if it is determined that the wearing state matches the photographing configuration information, a camera in the headphone is controlled to capture an image, and if it is determined that the wearing state does not match the photographing configuration information, the camera in the headphone is controlled not to capture the image; when the operation instruction is an inquiry instruction, if the wearing state is the worn state, the headphone is controlled to play a reply voice for the inquiry instruction provided by the voice assistant connected to the headphone, and if the wearing state is an un-worn state, the headphone is controlled not to play the reply voice; and when the operation instruction is an audio playing instruction, if the wearing state is the worn state, the headphone is controlled to play audio, and if the wearing state is the un-worn state, the headphone is controlled not to play the audio. In the above process, when acquiring the operation instruction, the headphone simultaneously monitors and determines the wearing state of the headphone, and controls the headphone to perform a corresponding target operation according to the wearing state and the operation instruction, so as to avoid that when the user takes the headphone out of the headphone box but does not wear it, or the user temporarily takes the headphone off the ear, or the headphone falls off the ear during use, the voice assistant still interacts with the user as if the headphone were in the worn state, making the headphone less flexible to use and poor in experience, thereby improving the flexibility of using the headphone.

Fig. 8 is a structural block diagram of a control device provided by an embodiment of the present disclosure. For ease of description, only parts related to the embodiments of the present disclosure are shown. The control device may be a chip or a chip module. Referring to Fig. 8, the control device 800 may include:
a monitoring module 801, configured to monitor a wearing state of a headphone;
an acquiring module 802, configured to acquire an operation instruction of a user for the headphone, where the operation instruction includes at least one of a wake-up instruction, a photographing instruction, an inquiry instruction or an audio playing instruction; and
a first controlling module 803, configured to control, according to the wearing state and the operation instruction, the headphone to perform a corresponding target operation.

According to one or more embodiments of the present disclosure, the first controlling module 803 is further configured to:
if the wearing state is the worn state, controlling the headphone to wake up a voice assistant connected to the headphone.

According to one or more embodiments of the present disclosure, the first controlling module 803 is further configured to:
acquiring photographing configuration information in response to the photographing instruction; and
controlling, according to the photographing configuration information and the wearing state, the headphone to perform the corresponding target operation.

According to one or more embodiments of the present disclosure, the first controlling module 803 is further configured to:
if it is determined that the wearing state matches the photographing configuration information, controlling a camera in the headphone to capture an image; and
if it is determined that the wearing state does not match the photographing configuration information, controlling the camera in the headphone not to capture the image.

According to one or more embodiments of the present disclosure, the first controlling module 803 is further configured to:
the photographing configuration information indicates that both ears capture images, and the wearing state indicates that both headphones are in the worn state;
the photographing configuration information indicates that both ears capture images, and the wearing state indicates that only one headphone is in the worn state;
or the photographing configuration information indicates that a single ear captures an image, and the wearing state indicates that both headphones are in the worn state;
or the photographing configuration information indicates that a single headphone, for example, a left headphone, captures an image, and the wearing state indicates that the headphone, for example, a left headphone, is in the worn state.

According to one or more embodiments of the present disclosure, the first controlling module 803 is further configured to:
the photographing configuration information indicates that one of the headphones captures an image, and the wearing state indicates that only another of the headphones is in the worn state.

According to one or more embodiments of the present disclosure, the first controlling module 803 is further configured to:
if the wearing state is the worn state, controlling the headphone to play a reply voice for the inquiry instruction provided by a voice assistant connected to the headphone; and
if the wearing state is the un-worn state, controlling the headphone not to play the reply voice or controlling the headphone not to respond to the inquiry instruction.

According to one or more embodiments of the present disclosure, the first controlling module 803 is further configured to:
if the wearing state is the worn state, controlling the headphone to play audio; and
if the wearing state is the un-worn state, controlling the headphone not to play the audio.

The control device provided by the present embodiment may be used to implement the technical solutions of the above method embodiments, and the implementation principles and technical effects thereof are similar, which will not be repeated here in the present embodiment.

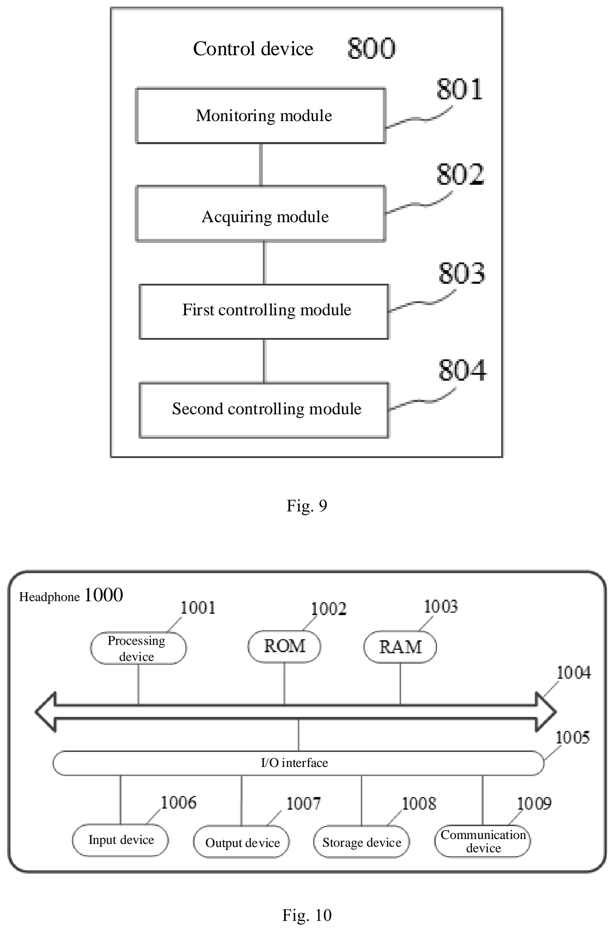

Fig. 9 is a structural block diagram of another control device provided by an embodiment of the present disclosure. For ease of description, only parts related to the embodiments of the present disclosure are shown. On the basis of the embodiment shown in Fig. 8, referring to Fig. 9, the control device 10 further includes a second controlling module 804.

The second controlling module 804 is configured to:
control a voice assistant connected to the headphone to play a preset voice, where the preset voice is used for indicating that the voice assistant is in a wake-up state.

The second controlling module 804 is configured to:
if it is determined that the wearing state does not match the photographing configuration information, controlling the headphone to play a prompt voice, where the prompt voice is used for prompting the photographing configuration information.

The second controlling module 804 is configured to:
when the reply voice is being played, if it is determined that the wearing state changes from the worn state to the un-worn state, controlling the headphone to pause playing the reply voice.

The second controlling module 804 is configured to:
if it is determined that the wearing state changes from the un-worn state to the worn state, determining a first duration corresponding to the un-worn state, and controlling, according to the first duration, the headphone to perform a corresponding target operation.

The second controlling module 804 is configured to:
if the first duration is less than or equal to a first preset duration, when it is determined that the wearing state changes from the un-worn state to the worn state, controlling the headphone to continue playing an unplayed reply voice.

The second controlling module 804 is configured to:
if the first duration is greater than the first preset duration, displaying a text corresponding to the reply voice through a terminal apparatus connected to the headphone.

The second controlling module 804 is configured to:
when the reply voice is being played, if it is determined that the wearing state changes from the worn state to the un-worn state, controlling the headphone not to respond to a new inquiry instruction.

The second controlling module 804 is configured to:
control the headphone not to receive voice information of the new inquiry instruction.

The second controlling module 804 is configured to:
in an audio playing process, if it is determined that the wearing state changes from the worn state to the un-worn state, controlling the headphone to pause playing audio, and in response to determining that the wearing state is the worn state, determining a connection state of the headphone during the un-worn period, and controlling, according to the connection state, the headphone to perform a corresponding target operation; and
in the audio playing process, if it is determined that the first voice corresponding to the inquiry instruction is acquired and a duration of the first voice is greater than or equal to a second preset duration, controlling the headphone to adjust a volume of the playing audio from a first volume to a preset volume until it is determined that the first voice ends, and controlling the headphone to adjust the volume of the playing audio to the first volume;
where a start moment of the un-worn period is a moment corresponding to the moment when it is determined that the wearing state changes from the worn state to the un-worn state, and an end moment of the un-worn period is a moment corresponding to the moment when it is determined that the wearing state is the worn state.

The second controlling module 804 is configured to:
if the connection state of the headphone during the un-worn period is used for indicating that the headphone is not disconnected, acquiring audio to be played corresponding to the un-worn period, and controlling the headphone to play the audio to be played; and
if the connection state of the headphone during the un-worn period is used for indicating that the headphone is disconnected, controlling the headphone not to play audio.

The second controlling module 804 is configured to:
if the headphone does not detect human voice and a duration corresponding to the situation that no human voice is detected is greater than or equal to a third preset duration, determining that the first voice ends.

The control device provided by the present embodiment may be used to implement the technical solutions of the above method embodiments, and the implementation principles and technical effects thereof are similar, which will not be repeated here in the present embodiment.

In order to implement the above embodiments, an embodiment of the present disclosure further provides a headphone.

Fig. 10 is a schematic structural diagram of a headphone provided by an embodiment of the present disclosure. Referring to Fig. 10, it shows a schematic structural diagram of a headphone 1000 suitable for implementing the embodiments of the present disclosure. The headphone shown in Fig. 10 is only an example, and should not bring any limitation to the functions and use ranges of the embodiments of the present disclosure.

As shown in Fig. 10, the headphone 1000 may include a processing device (such as a central processing unit, a graphics processor and the like) 1001, which may perform various appropriate actions and processes according to a program stored in a read-only memory (abbreviated as ROM) 1002 or a program loaded from a storage device 1008 into a random access memory (abbreviated as RAM) 1003. In the RAM 1003, various programs and data required for the operation of the headphone 1000 are also stored. The processing device 1001, the ROM 1002 and the RAM 1003 are connected to each other through a bus 1004. An input/output (I/O) interface 1005 is also connected to the bus 1004.

Usually, the following apparatus may be connected to the I/O interface 1005: an input device 1006 including, for example, a touch screen, a touchpad, a keyboard, a mouse, a camera, a microphone, an accelerometer, a gyroscope and the like; an output device 1007 including, for example, a liquid crystal display (Liquid Crystal Display, LCD for short), a speaker, a vibrator and the like; a storage device 1008 including, for example, a magnetic tape, a hard disk and the like; and a communication apparatus 1009. The communication device 1009 may allow the headphone 1000 to perform wireless or wired communication with other apparatuses to exchange data. Although Fig. 10 shows the headphone 1000 with various devices, it should be understood that not all the devices shown here need to be implemented or provided. More or fewer devices may be implemented or provided alternatively.

In particular, according to the embodiments of the present disclosure, the process described above with reference to the flowchart may be implemented as a computer software program. For example, the embodiments of the present disclosure include a computer program product, which includes a computer program carried on a computer-readable medium, where the computer program contains program codes for performing the method shown in the flowchart. In such an embodiment, the computer program may be downloaded and installed from a network through the communication device 1009, or installed from the storage device 1008, or installed from the ROM 1002. When the computer program is executed by the processing device 1001, the above-mentioned functions defined in the method of the embodiments of the present disclosure are executed.

It should be noted that the above-mentioned computer-readable medium in the present disclosure may be a computer-readable signal medium, a computer-readable storage medium, or any combination of the two. The computer-readable storage medium may be, for example, but not limited to, an electrical, magnetic, optical, electromagnetic, infrared, or semi-conductive system, device or member, or any suitable combination of the above. More specific examples of the computer-readable storage medium may include, but are not limited to: an electrical connection with one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage member, a magnetic storage member, or any suitable combination of the above. In the present disclosure, a computer-readable storage medium may be any tangible medium that contains or stores a program, which may be used by or in combination with an instruction execution system, device or member. In the present disclosure, a computer-readable signal medium may include a data signal propagated in a baseband or as a part of a carrier wave, and computer-readable program codes are carried therein. This propagated data signal may adopt multiple forms, including but not limited to an electromagnetic signal, an optical signal or any suitable combination of the above. The computer-readable signal medium may also be any computer-readable medium other than the computer-readable storage medium, and the computer-readable signal medium may send, propagate or transmit a program used by or in combination with an instruction execution system, device or member. The program codes contained on the computer-readable medium may be transmitted by any suitable medium, including but not limited to: a wire, an optical cable, a RF (radio frequency), etc., or any suitable combination of the above.

The above-mentioned computer-readable medium may be contained in the above-mentioned electronic device, or may exist alone without being assembled into the headphone.

The above-mentioned computer-readable medium carries one or more programs, and when the above-mentioned one or more programs are executed by the electronic device, the headphone is caused to execute the method shown in the above-mentioned embodiments.

Computer program codes for performing the operations of the present disclosure may be written in one or more programming languages or a combination thereof, where the above-mentioned programming languages include object-oriented programming languages such as Java, Smalltalk, C++, and also include conventional procedural programming languages such as "C" language or similar programming languages. Program codes may be executed entirely on a user computer, partly on the user computer, as a stand-alone software package, partly on the user computer and partly on a remote computer, or entirely on the remote computer or server. In the case of involving a remote computer, the remote computer may be connected to the user computer through any kind of network, including a local area network (Local Area Network, LAN for short) or a wide area network (Wide Area Network, WAN for short), or it may be connected to an external computer (for example, connected through the Internet with the aid of an Internet service provider).

The flowchart and block diagrams in the drawings illustrate the architecture, functionality, and operation of possible implementations of systems, methods and computer program products according to various embodiments of the present disclosure. In this regard, each block in the flowchart or block diagrams may represent a module, program segment, or portion of code, which includes one or more executable instructions for implementing the specified logical function(s). It should also be noted that, in some alternative implementations, the functions noted in the block may occur in an order different from that noted in the drawings. For example, two blocks shown in succession may, in fact, be executed substantially concurrently, or the blocks may sometimes be executed in the reverse order, depending upon the functionality involved. It will also be noted that each block of the block diagrams and/or flowchart, and combinations of blocks in the block diagrams and/or flowchart, may be implemented by special purpose hardware-based systems that perform the specified functions or operations, or combinations of special purpose hardware and computer instructions.

The involved units described in the embodiments of the present disclosure may be implemented by software or hardware. Here, the name of a unit does not constitute a limitation on the unit itself under certain circumstances, for example, the first acquiring unit may also be described as "a unit for acquiring at least two internet protocol addresses".

The functions described above herein may be performed at least in part by one or more hardware logic components. For example, without limitation, exemplary types of hardware logic components that may be used include: field programmable gate array (FPGA), application specific integrated circuit (ASIC), application specific standard product (ASSP), system on chip (SOC), complex programmable logical device (CPLD) and more.

In a first aspect, according to one or more embodiments of the present disclosure, a control method is provided, which is applied to a headphone, where the method includes:
monitoring a wearing state of the headphone;
acquiring an operation instruction of a user for the headphone, where the operation instruction includes at least one of a wake-up instruction, a photographing instruction, an inquiry instruction or an audio playing instruction; and
controlling, according to the wearing state and the operation instruction, the headphone to perform a corresponding target operation.

According to one or more embodiments of the present disclosure, the operation instruction is the wake-up instruction; and controlling, according to the wearing state and the operation instruction, the headphone to perform the corresponding target operation includes:
if the wearing state is a worn state, controlling the headphone to wake up a voice assistant connected to the headphone.

According to one or more embodiments of the present disclosure, the method further includes:
controlling the voice assistant connected to the headphone to play a preset voice, where the preset voice is used for indicating that the voice assistant is in a wake-up state.

According to one or more embodiments of the present disclosure, a camera is provided in the headphone, the operation instruction is the photographing instruction, and controlling, according to the wearing state and the operation instruction, the headphone to perform the corresponding target operation includes:
acquiring photographing configuration information in response to the photographing instruction; and
controlling, according to the photographing configuration information and the wearing state, the headphone to perform the corresponding target operation.

According to one or more embodiments of the present disclosure, controlling, according to the photographing configuration information and the photographing instruction, the headphone to perform the corresponding target operation includes:
if it is determined that the wearing state matches the photographing configuration information, controlling the camera in the headphone to capture an image; and
if it is determined that the wearing state does not match the photographing configuration information, controlling the camera in the headphone not to capture the image.

According to one or more embodiments of the present disclosure, the method further includes:
if it is determined that the wearing state does not match the photographing configuration information, controlling the headphone to play a prompt voice, where the prompt voice is used for prompting the photographing configuration information.

According to one or more embodiments of the present disclosure, determining that the wearing state matches the photographing configuration information includes at least one of the following:
the photographing configuration information indicates that both ears capture images, and the wearing state indicates that both headphones are in the worn state;
the photographing configuration information indicates that both ears capture images, and the wearing state indicates that only one headphone is in the worn state;
or the photographing configuration information indicates that a single ear captures an image, and the wearing state indicates that both headphones are in the worn state.

According to one or more embodiments of the present disclosure, determining that the wearing state does not match the photographing configuration information includes:
the photographing configuration information indicates that one of the headphones captures an image, and the wearing state indicates that only another of the headphones is in the worn state.

According to one or more embodiments of the present disclosure, the operation instruction is the inquiry instruction, and controlling, according to the wearing state and the operation instruction, the headphone to perform the corresponding target operation includes:
if the wearing state is the worn state, controlling the headphone to play a reply voice for the inquiry instruction provided by a voice assistant connected to the headphone; and
if the wearing state is an un-worn state, controlling the headphone not to play the reply voice or controlling the headphone not to respond to the inquiry instruction.

According to one or more embodiments of the present disclosure, the method further includes:
when the reply voice is being played, if it is determined that the wearing state changes from the worn state to the un-worn state, controlling the headphone to pause playing the reply voice.

According to one or more embodiments of the present disclosure, the method further includes:
if it is determined that the wearing state changes from the un-worn state to the worn state, determining a first duration corresponding to the un-worn state, and controlling, according to the first duration, the headphone to perform a corresponding target operation.

According to one or more embodiments of the present disclosure, controlling, according to the first duration, the headphone to perform the corresponding target operation includes:
if the first duration is less than or equal to a first preset duration, when it is determined that the wearing state changes from the un-worn state to the worn state, controlling the headphone to continue playing an unplayed reply voice.

According to one or more embodiments of the present disclosure, controlling, according to the first duration, the headphone to perform the corresponding target operation includes:
if the first duration is greater than the first preset duration, displaying a text corresponding to the reply voice through a terminal apparatus connected to the headphone.

According to one or more embodiments of the present disclosure, the method further includes:
when the reply voice is being played, if it is determined that the wearing state changes from the worn state to the un-worn state, controlling the headphone not to respond to a new inquiry instruction.

According to one or more embodiments of the present disclosure, controlling the headphone not to respond to the new inquiry instruction includes:
controlling the headphone not to receive voice information of the new inquiry instruction.

According to one or more embodiments of the present disclosure, the operation instruction is the audio playing instruction, and controlling, according to the wearing state and the operation instruction, the headphone to perform the corresponding target operation includes:
if the wearing state is the worn state, controlling the headphone to play audio; and
if the wearing state is the un-worn state, controlling the headphone not to play the audio.

According to one or more embodiments of the present disclosure, the method further includes:
in an audio playing process, if it is determined that the wearing state changes from the worn state to the un-worn state, controlling the headphone to pause playing audio, and in response to determining that the wearing state is the worn state, determining a connection state of the headphone during the un-worn period, and controlling, according to the connection state, the headphone to perform a corresponding target operation; and
in the audio playing process, if it is determined that the first voice corresponding to the inquiry instruction is acquired and a duration of the first voice is greater than or equal to a second preset duration, controlling the headphone to adjust a volume of the playing audio from a first volume to a preset volume until it is determined that the first voice ends, and controlling the headphone to adjust the volume of the playing audio to the first volume;
where a start moment of the un-worn period is a moment corresponding to the moment when it is determined that the wearing state changes from the worn state to the un-worn state, and an end moment of the un-worn period is a moment corresponding to the moment when it is determined that the wearing state is the worn state.

According to one or more embodiments of the present disclosure, controlling, according to the connection state, the headphone to perform the corresponding target operation includes:
if the connection state of the headphone during the un-worn period is used for indicating that the headphone is not disconnected, acquiring audio to be played corresponding to the un-worn period, and controlling the headphone to play the audio to be played; and
if the connection state of the headphone during the un-worn period is used for indicating that the headphone is disconnected, controlling the headphone not to play audio.

According to one or more embodiments of the present disclosure, determining that the first voice ends includes:
if the headphone does not detect human voice and a duration corresponding to the situation that no human voice is detected is greater than or equal to a third preset duration, determining that the first voice ends.

In a second aspect, according to one or more embodiments of the present disclosure, a control device is provided, which includes:
a monitoring module, configured to monitor a wearing state of a headphone;
an acquiring module, configured to acquire an operation instruction of a user for the headphone, where the operation instruction includes at least one of a wake-up instruction, a photographing instruction, an inquiry instruction or an audio playing instruction; and
a first controlling module, configured to control, according to the wearing state and the operation instruction, the headphone to perform a corresponding target operation.

According to one or more embodiments of the present disclosure, the first controlling module is further configured to:
if the wearing state is a worn state, controlling the headphone to wake up a voice assistant connected to the headphone.

According to one or more embodiments of the present disclosure, the first controlling module is further configured to:
acquiring photographing configuration information in response to the photographing instruction; and
controlling, according to the photographing configuration information and the wearing state, the headphone to perform the corresponding target operation.

According to one or more embodiments of the present disclosure, the first controlling module is further configured to:
if it is determined that the wearing state matches the photographing configuration information, controlling a camera in the headphone to capture an image; and
if it is determined that the wearing state does not match the photographing configuration information, controlling the camera in the headphone not to capture the image.

According to one or more embodiments of the present disclosure, the first controlling module is further configured to:
the photographing configuration information indicates that both ears capture images, and the wearing state indicates that both headphones are in the worn state;
the photographing configuration information indicates that both ears capture images, and the wearing state indicates that only one headphone is in the worn state;
or the photographing configuration information indicates that a single ear captures an image, and the wearing state indicates that both headphones are in the worn state.

According to one or more embodiments of the present disclosure, the first controlling module is further configured to:
the photographing configuration information indicates that one of the headphones captures an image, and the wearing state indicates that only another of the headphones is in the worn state.

According to one or more embodiments of the present disclosure, the first controlling module is further configured to:
if the wearing state is the worn state, controlling the headphone to play a reply voice for the inquiry instruction provided by a voice assistant connected to the headphone; and
if the wearing state is the un-worn state, controlling the headphone not to play the reply voice or controlling the headphone not to respond to the inquiry instruction.

According to one or more embodiments of the present disclosure, the first controlling module is further configured to:
if the wearing state is the worn state, controlling the headphone to play audio; and
if the wearing state is the un-worn state, controlling the headphone not to play the audio.

According to one or more embodiments of the present disclosure, the device further includes a second controlling module.

The second controlling module is configured to:
control a voice assistant connected to the headphone to play a preset voice, where the preset voice is used for indicating that the voice assistant is in a wake-up state.

The second controlling module is configured to:
if it is determined that the wearing state does not match the photographing configuration information, controlling the headphone to play a prompt voice, where the prompt voice is used for prompting the photographing configuration information.

The second controlling module is configured to:
when the reply voice is being played, if it is determined that the wearing state changes from the worn state to the un-worn state, controlling the headphone to pause playing the reply voice.

The second controlling module is configured to:
if it is determined that the wearing state changes from the un-worn state to the worn state, determining a first duration corresponding to the un-worn state, and controlling, according to the first duration, the headphone to perform a corresponding target operation.

The second controlling module is configured to:
if the first duration is less than or equal to a first preset duration, when it is determined that the wearing state changes from the un-worn state to the worn state, controlling the headphone to continue playing an unplayed reply voice.

The second controlling module is configured to:
if the first duration is greater than the first preset duration, displaying a text corresponding to the reply voice through a terminal apparatus connected to the headphone.

The second controlling module is configured to:
when the reply voice is being played, if it is determined that the wearing state changes from the worn state to the un-worn state, controlling the headphone not to respond to a new inquiry instruction.

The second controlling module is configured to:
control the headphone not to receive voice information of the new inquiry instruction.

The second controlling module is configured to:
in an audio playing process, if it is determined that the wearing state changes from the worn state to the un-worn state, controlling the headphone to pause playing audio, and in response to determining that the wearing state is the worn state, determining a connection state of the headphone during the un-worn period, and controlling, according to the connection state, the headphone to perform a corresponding target operation; and
in the audio playing process, if it is determined that the first voice corresponding to the inquiry instruction is acquired and a duration of the first voice is greater than or equal to a second preset duration, controlling the headphone to adjust a volume of the playing audio from a first volume to a preset volume until it is determined that the first voice ends, and controlling the headphone to adjust the volume of the playing audio to the first volume;
where a start moment of the un-worn period is a moment corresponding to the moment when it is determined that the wearing state changes from the worn state to the un-worn state, and an end moment of the un-worn period is a moment corresponding to the moment when it is determined that the wearing state is the worn state.

The second controlling module is configured to:
if the connection state of the headphone during the un-worn period is used for indicating that the headphone is not disconnected, acquiring audio to be played corresponding to the un-worn period, and controlling the headphone to play the audio to be played; and
if the connection state of the headphone during the un-worn period is used for indicating that the headphone is disconnected, controlling the headphone not to play audio.

The second controlling module is configured to:
if the headphone does not detect human voice and a duration corresponding to the situation that no human voice is detected is greater than or equal to a third preset duration, determining that the first voice ends.

In a third aspect, according to one or more embodiments of the present disclosure, a headphone is provided, which includes: at least one processor and a memory;
where the memory stores a computer-executable instruction; and
the at least one processor executes the computer-executable instruction stored in the memory, to cause the at least one processor to execute the control method according to the first aspect and various possible designs of the first aspect.

In a fourth aspect, according to one or more embodiments of the present disclosure, a computer-readable storage medium is provided, where a computer-executable instruction is stored in the computer-readable storage medium, and when the computer-executable instruction is executed by a processor, the control method according to the first aspect and various possible designs of the first aspect is implemented.

In a fifth aspect, according to one or more embodiments of the present disclosure, a computer program product is provided, which includes a computer program, where when the computer program is executed by a processor, the control method according to the first aspect and various possible designs of the first aspect is implemented.

The above description is only preferred embodiments of the present disclosure and an explanation of the applied technical principles. Those skilled in the art should understand that the disclosed scope involved in the present disclosure is not limited to the technical solutions formed by the specific combination of the above technical features, and should also cover other technical solutions formed by any combination of the above technical features or their equivalent features without departing from the above disclosed concept. For example, the above features and the technical features provided in the present disclosure (but not limited to) with similar functions are replaced each other to form a technical solution.

In addition, although the operations are depicted in a specific order, this should not be understood as requiring these operations to be executed in a specific order shown or in a sequential order. Under certain circumstances, multitasking and parallel processing may be advantageous. Similarly, although several specific implementation details are included in the above discussion, these should not be interpreted as limitations on the scope of the present disclosure. Certain features described in the context of separate embodiments may also be implemented in a single embodiment in combination. On the contrary, various features described in the context of a single embodiment may also be implemented in multiple embodiments individually or in any suitable sub-combination.

Although the subject matter has been described in the language specific to structural features and/or logical actions of the method, it should be understood that the subject matter defined in the appended claims is not necessarily limited to the specific features or actions described above. On the contrary, the specific features and actions described above are only exemplary forms of implementing the claims.

## Claims

1. A control method, applied to a headphone (701;1000), wherein the method comprises:
monitoring a wearing state of the headphone (701; 1000);
acquiring an operation instruction of a user for the headphone (701;1000), wherein the operation instruction comprises at least one of a wake-up instruction, a photographing instruction, an inquiry instruction or an audio playing instruction; and
according to the wearing state and the operation instruction, controlling the headphone (701;1000) to perform a corresponding target operation.

2. The control method of claim 1, wherein the operation instruction is the wake-up instruction, and according to the wearing state and the operation instruction, controlling the headphone (701;1000) to perform the corresponding target operation comprises:
if the wearing state is a worn state, controlling the headphone (701;1000) to wake up a voice assistant connected to the headphone (701;1000); optionally,
wherein the method further comprises:
controlling the voice assistant connected to the headphone (701;1000) to play a preset voice, wherein the preset voice is used for indicating that the voice assistant is in a wake-up state.

3. The control method of claim 1, wherein a camera is provided in the headphone (701;1000), the operation instruction is the photographing instruction, and according to the wearing state and the operation instruction, controlling the headphone (701;1000) to perform the corresponding target operation comprises:
in response to the photographing instruction, acquiring photographing configuration information; and
according to the photographing configuration information and the wearing state, controlling the headphone (701;1000) to perform the corresponding target operation.

4. The control method of claim 3, wherein according to the photographing configuration information and the photographing instruction, controlling the headphone (701;1000) to perform the corresponding target operation comprises:
if it is determined that the wearing state matches the photographing configuration information, controlling the camera in the headphone (701;1000) to capture an image; and
if it is determined that the wearing state does not match the photographing configuration information, controlling the camera in the headphone (701;1000) not to capture the image; optionally,
wherein the method further comprises:
if it is determined that the wearing state does not match the photographing configuration information, controlling the headphone (701;1000) to play a prompt voice, wherein the prompt voice is used for prompting the photographing configuration information.

5. The control method of claim 4, wherein determining that the wearing state matches the photographing configuration information comprises at least one of the following:
the photographing configuration information indicates that both ears capture images, and the wearing state indicates that both headphones (701; 1000) are in the worn state;
the photographing configuration information indicates that both ears capture images, and the wearing state indicates that only one headphone (701;1000) is in the worn state; or
the photographing configuration information indicates that a single ear captures an image, and the wearing state indicates that both headphones (701;1000) are in the worn state; optionally,
wherein determining that the wearing state does not match the photographing configuration information comprises:
the photographing configuration information indicates that one of the headphones (701; 1000) captures an image, and the wearing state indicates that only another of the headphones (701;1000) is in the worn state.

6. The control method of claim 1, wherein the operation instruction is the inquiry instruction, and according to the wearing state and the operation instruction, controlling the headphone (701;1000) to perform the corresponding target operation comprises:
if the wearing state is a worn state, controlling the headphone (701;1000) to play a reply voice for the inquiry instruction and provided by a voice assistant connected to the headphone; and
if the wearing state is an un-worn state, controlling the headphone (701;1000) not to play the reply voice or controlling the headphone (701;1000) not to respond to the inquiry instruction.

7. The control method of claim 6, further comprising:
when the reply voice is being played, if it is determined that the wearing state changes from the worn state to the un-worn state, controlling the headphone (701;1000) to pause playing the reply voice.

8. The control method of claim 7, further comprising:
if it is determined that the wearing state changes from the un-worn state to the worn state, determining a first duration corresponding to the un-worn state, and according to the first duration, controlling the headphone (701;1000) to perform a corresponding target operation.

9. The control method of claim 8, wherein according to the first duration, controlling the headphone (701;1000) to perform the corresponding target operation comprises:
if the first duration is less than or equal to a first preset duration, when it is determined that the wearing state changes from the un-worn state to the worn state, controlling the headphone (701;1000) to continue playing an unplayed reply voice;
if the first duration is greater than the first preset duration, displaying a text corresponding to the reply voice through a terminal apparatus connected to the headphone (701;1000).

10. The control method of claim 7, further comprising:
when the reply voice is being played, if it is determined that the wearing state changes from the worn state to the un-worn state, controlling the headphone (701;1000) not to respond to a new inquiry instruction; optionally,
wherein controlling the headphone not to respond to the new inquiry instruction comprises:
controlling the headphone not to receive voice information of the new inquiry instruction.

11. The control method of claim 1, wherein the operation instruction is the audio playing instruction, and according to the wearing state and the operation instruction, controlling the headphone (701;1000) to perform the corresponding target operation comprises:
if the wearing state is a worn state, controlling the headphone (701;1000) to play audio; and
if the wearing state is an un-worn state, controlling the headphone (701;1000) not to play the audio.

12. The control method of claim 11, further comprising:
in an audio playing process, if it is determined that the wearing state changes from the worn state to the un-worn state, controlling the headphone (701;1000) to pause playing audio, and in response to determining that the wearing state is the worn state, determining a connection state of the headphone (701;1000) during an un-worn period, and according to the connection state, controlling the headphone (701;1000) to perform a corresponding target operation; and
in the audio playing process, if it is determined that a first voice corresponding to the inquiry instruction is acquired and a duration of the first voice is greater than or equal to a second preset duration, controlling the headphone to adjust a volume of the playing audio from a first volume to a preset volume until it is determined that the first voice ends, and controlling the headphone (701;1000) to adjust the volume of the playing audio to the first volume;
wherein a start moment of the un-worn period is a moment corresponding to a time when it is determined that the wearing state changes from the worn state to the un-worn state, and an end moment of the un-worn period is a moment corresponding to a time when it is determined that the wearing state is the worn state.

13. The control method of claim 12, wherein according to the connection state, controlling the headphone (701;1000) to perform the corresponding target operation comprises:
if the connection state of the headphone (701;1000) during the un-worn period is used for indicating that the headphone (701;1000) is not disconnected, acquiring audio to be played corresponding to the un-worn period, and controlling the headphone to play the audio to be played; and
if the connection state of the headphone (701;1000) during the un-worn period is used for indicating that the headphone (701;1000) is disconnected, controlling the headphone (701;1000) not to play audio; optionally,
wherein determining that the first voice ends comprises:
if the headphone (701; 1000) does not detect human voice and a duration corresponding to a situation that the human voice is not detected is greater than or equal to a third preset duration, determining that the first voice ends.

14. A headphone (701;1000), comprising: a processor (1001) and a memory;
wherein the memory (1008) stores a computer-executable instruction; and
the processor (1001) executes the computer-executable instruction stored in the memory (1008), to cause the processor (1001) to execute the control method of any one of claims 1 to 13.

15. A non-transitory computer-readable storage medium, wherein a computer-executable instruction is stored in the computer-readable storage medium, and when the computer-executable instruction is executed by a processor (1001), the control method of any one of claims 1 to 13 is implemented.
